# FASCICULE DE BREVET EUROPEEN

(11) **EP 3 454 096 B1**
(45) Date de publication et mention de la délivrance du brevet: **20.12.2023**
(21) Numéro de dépôt: 18193207.0
(22) Date de dépôt: 07.09.2018
(51) Int. Cl.: G02B 3/08, F21V 5/04, F21S 41/255, F21S 41/275

(54) **LENTILLE DE FRESNEL AVEC ANGLE DE DEPOUILLE VARIABLE**
FRESNELLINSE MIT VARIABLEM FREIWINKEL
FRESNEL LENS WITH VARIABLE DRAW ANGLE

(30) Priorité: 11.09.2017 FR 1758363
(43) Date de publication de la demande: 13.03.2019
(73) Titulaire: Valeo Vision, 93012 Bobigny Cedex (FR)
(72) Inventeur: LEFAUDEUX, Nicolas, 93012 BOBIGNY Cedex (FR); DE LAMBERTERIE, Antoine, 93012 BOBIGNY Cedex (FR); MBATA, Samira, 93012 BOBIGNY Cedex (FR); CANONNE, Thomas, 93012 BOBIGNY Cedex (FR); HOANG, Van-Thai, 93012 BOBIGNY Cedex (FR); DUBOIS, Vincent, 93012 BOBIGNY Cedex (FR); AMIEL, François-Xavier, 93012 BOBIGNY Cedex (FR)
(74) Mandataire: Valeo Visibility

(56) Documents cités:
- FR-A1- 2 867 835
- GB-A- 2 523 346
- US-A- 659 353
- US-A- 4 238 817
- US-A1- 2005 041 307

## Description

La présente invention se rapporte au domaine des lentilles de Fresnel et des dispositifs lumineux comprenant de telles lentilles.

Les lentilles de Fresnel permettent de réaliser des lentilles moins épaisses que des lentilles fortement convexes mais avec les mêmes propriétés de déviation des rayons lumineux. Elles comportent une succession d'échelons, cette succession s'étendant selon une direction allant du centre de la lentille à un bord de celle-ci. Le document GB-A-2523346 divulgue une lentille de Fresnel. Le document FR2867835 divulgue un module lumineux comprenant une lentille de Fresnel.

Le document FR2799153 divulgue une autre lentille de Fresnel. Chaque échelon présente une première face, tournée vers l'extérieur de lentille, et une deuxième face, dite dépouille, tournée vers le centre de lentille. L'ensemble des dioptres formés par les premières faces forment l'équivalent d'un dioptre d'une face de sortie d'une lentille convergente. Dans la lentille de Fresnel, les dépouilles permettent de diminuer l'épaisseur de la lentille en décalant les premières faces vers la face arrière de la lentille selon une direction parallèle à l'axe optique de la lentille.

Bien que ce soient les premières faces qui aient essentiellement une utilité optique, certains rayons peuvent rencontrer les dépouilles et être alors déviés de manière inappropriée par les dépouilles.

Pour diminuer ce risque, le document FR2799153 propose d'agencer les dépouilles de manière à ce que les rayons issus du foyer de la lentille, après une première réfraction par la face d'entrée, se propagent dans la lentille de manière parallèle à ces dépouilles.

Cependant, bien que leur nombre soit diminué, il s'avère qu'il subsiste des rayons parasites susceptibles d'altérer la photométrie d'un faisceau obtenu à partir d'une telle lentille.

Le problème technique que vise à résoudre l'invention est donc d'améliorer un faisceau lumineux obtenu à partir d'une lentille de Fresnel.

A cet effet, un premier objet de l'invention est un module lumineux comprenant une lentille de Fresnel tel que définit dans la revendication 1.

Ainsi, la dépouille au niveau du deuxième côté rabat les rayons parasites vers la zone recevant les rayons parasites provenant de la dépouille au niveau du premier côté. Ainsi, la lentille de Fresnel oriente les rayons parasites dans une zone recevant à la fois les rayons parasites provenant du premier côté de la lentille et les rayons parasites provenant du deuxième côté de lentille, cette zone formant la zone de réception des rayons parasites.

La lentille selon l'invention peut être ensuite agencée dans un dispositif lumineux de véhicule de manière à ce que cette zone de réception soit à un endroit requérant un éclairage supérieur et/ou il soit moins gênant.

Par côté de la lentille, on entend une zone située sur le côté de l'axe optique, s'étendant donc entre l'axe optique et le bord périphérique de celle-ci.

La lentille du module lumineux selon l'invention peut optionnellement comprendre une ou plusieurs des caractéristiques suivantes :
- la majorité des échelons sont des échelons à dépouille évolutive ; ainsi, davantage de rayons parasites déviés par les dépouilles sont renvoyés vers la zone de réception, sur tout le tour de la lentille ; notamment, au moins 75%, par exemple au moins 90%, voire 100%, des échelons sont des échelons à dépouille évolutive ;
- la lentille est destinée à être orientée dans un véhicule avec le premier côté en bas et le deuxième côté en haut ; ainsi, les rayons parasites sont renvoyés vers le bas, où ils n'éblouiront pas les conducteurs des véhicules suivis ou venant en sens inverse ;
- l'angle de dépouille augmente progressivement le long du ou d'au moins l'un des échelons à dépouille évolutive depuis le deuxième côté vers le premier côté ; ainsi la réalisation de la lentille est simplifiée ;
- la surface de la dépouille du ou des échelons à dépouille évolutive est continuellement dérivable ; cela permet d'éviter des ruptures de surface, telles que des marches, diminuant ainsi le risque de rayons parasites ; par ailleurs, la réalisation est également simplifiée ;
- pour une même direction perpendiculaire à l'axe optique, les angles de dépouille augmentent d'un échelon à l'autre le long de cette direction, selon un sens allant de l'axe optique vers le bord périphérique de la lentille ; davantage de rayons parasites sont collectés dans la zone de réception sur l'étendue de la lentille dans cette direction ;
- si on considère la valeur minimum d'angle de dépouille sur l'ensemble des angles de dépouille des différents échelons sur le deuxième côté de la lentille et la valeur maximum d'angle de dépouille sur l'ensemble des angles de dépouille des différents échelons sur le premier côté de la lentille, l'écart angulaire entre cette valeur minimum et cette valeur maximum est sensiblement égal à l'épaisseur du faisceau de lumière destiné à éclairer la lentille ;
- l'écart angulaire visé à l'alinéa ci-dessus peut avoir une valeur comprise entre 10° et 20° ; ces valeurs donnent de bon résultats ; dans ce cas, le faisceau destiné à éclairer la lentille a une épaisseur comprise entre 10° et 20° ;
- le long du ou d'au moins l'un des échelons à dépouille évolutive et depuis le deuxième côté vers le premier côté, l'échelon correspondant présente au moins une portion d'étalement située latéralement par rapport à une direction s'étendant du premier côté au deuxième côté, dans cette portion d'étalement :
   o l'angle de dépouille variant davantage, et/ou
   o l'angle de dépouille diminuant puis augmentant à nouveau ;
   ainsi, il est possible d'étaler les rayons issus des zones latérales de la lentille et qui partent dans la zone sombre ;
- le long d'un échelon donné, dans un plan perpendiculaire à l'axe optique, l'angle entre le début et la fin de la portion d'étalement et dont le sommet est sensiblement sur l'axe optique a une valeur comprise entre 15 et 45°, cet angle s'étendant de part et d'autre d'un point situé à mi-chemin entre ledit premier côté et ledit deuxième côté ;
- la surface de la dépouille du ou des échelons à dépouille évolutive est une surface réglée ; elle est ainsi plus simple à réaliser ;
- la face principale d'au moins l'un des échelons à dépouille évolutive peut comprendre des modulations d'épaisseur agencées de manière à diminuer le chromatisme de la lentille ou à atténuer la netteté de coupure du faisceau de croisement ;
- la face principale d'au moins l'un des échelons à dépouille évolutive comprennent des portions optiques diffractives ;
- chaque échelon présente une arrête, les arrêtes de la majorité des échelons étant coplanaires ; la lentille a ainsi un encombrement d'épaisseur réduit ; par majorité des échelons, on entend au moins la moitié du nombre d'échelons que comprend la lentille ; notamment, les arrêtes d'au moins 75%, par exemple d'au moins 90%, voire 100%, des échelons peuvent être coplanaires ;
- chaque échelon présente une arrête, les arrêtes de la majorité des échelons étant concentriques, notamment autour de l'axe optique ; cela permet de réaliser plus facilement les échelons de manière continue autour de l'axe optique ; notamment, les arrêtes d'au moins 75%, par exemple d'au moins 90%, voire 100%, des échelons sont concentriques ;

La lentille peut ainsi être utilisée pour former un faisceau d'éclairage à coupure, par exemple un faisceau de croisement.

Le module lumineux selon l'invention peut optionnellement comprendre une ou plusieurs des caractéristiques suivantes :
- la lentille peut être agencée de manière à ce que le premier côté soit situé par rapport à l'axe optique du même côté que la zone lumineuse ; ainsi, les rayons déviés par les dépouilles ne vont pas dans la zone sombre et renforcent la luminosité de la zone lumineuse ;
- le cache est horizontal lorsque la lentille est verticale, le premier côté étant alors situé à un niveau situé essentiellement en dessous d'un plan selon lequel s'étend globalement la surface supérieure du cache ; ainsi, les rayons déviés par les dépouilles ne vont pas dans la zone sombre et renforcent la luminosité de la zone lumineuse ; la surface supérieure du cache peut être réfléchissante.

L'invention a également pour objet un dispositif lumineux comprenant un module lumineux selon l'invention, notamment un projecteur de véhicule.

L'invention a également pour objet un véhicule comprenant un dispositif lumineux selon l'invention, notamment connecté à l'alimentation électrique du véhicule.

Sauf indication contraire, les termes « avant », « arrière », « inférieur », « supérieur », « côté », « transversal » se réfèrent à l'orientation que sont destinés à prendre la lentille et le module lumineux dans le dispositif lumineux et par rapport au sens d'émission de la lumière hors du dispositif lumineux.

Les termes « amont » et « aval » se réfère à la direction de propagation de la lumière.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue de face d'une lentille selon un exemple de réalisation de l'invention ;
- les figures 2 et 3 sont des sections de la figure 1 selon des plans perpendiculaires respectivement à l'axe Y et à l'axe Z ;
- la figure 4 est un schéma représentant un module lumineux selon l'invention équipé de la lentille de la figure 1;
- la figure 5 est un schéma d'un faisceau lumineux obtenu au moyen du module lumineux de la figure 4 ;
- les figures 6 et 7 sont des agrandissements respectivement de la zone VI et de la zone VII en figure 2;
- la figure 8 est un tableau de certaines valeurs de l'angle de dépouille selon l'angle de positionnement θ pour un échelon donné eᵢ.

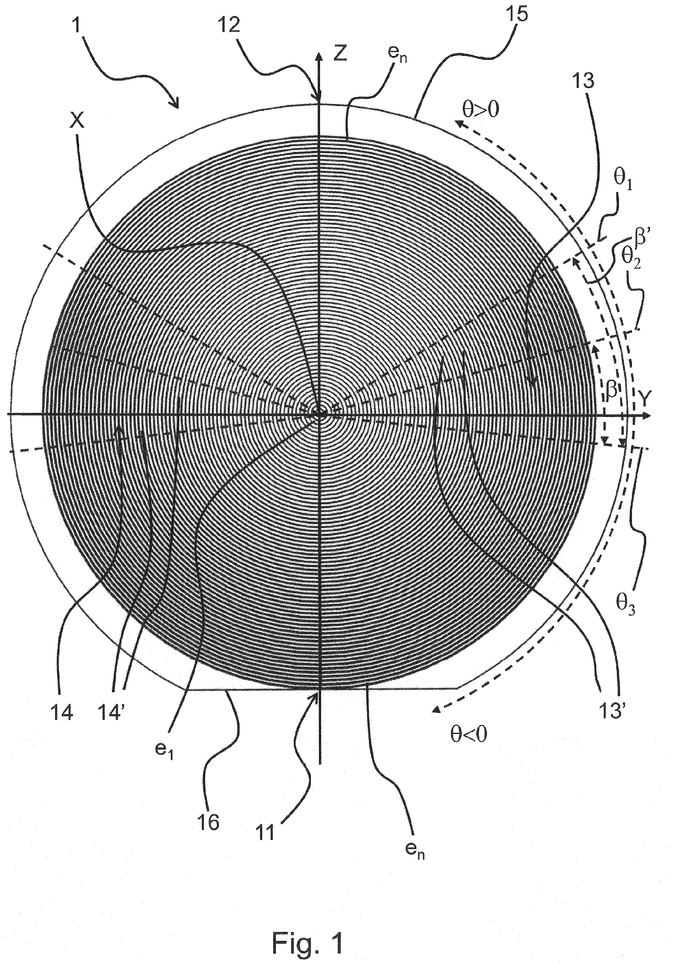

La figure 1 illustre un exemple de lentille 1 de Fresnel selon l'invention et vue de face.

La lentille 1 présente un axe optique X.

Selon l'invention, comme ici, la lentille 1 peut être destinée à être positionnée dans un véhicule de manière à ce que cet axe optique X soit parallèle à l'axe longitudinal du véhicule.

L'axe Z et l'axe Y correspondent ici respectivement aux orientations verticales et transversales. La lentille 1 est ici orientée dans la position qu'elle est destinée à prendre dans le véhicule.

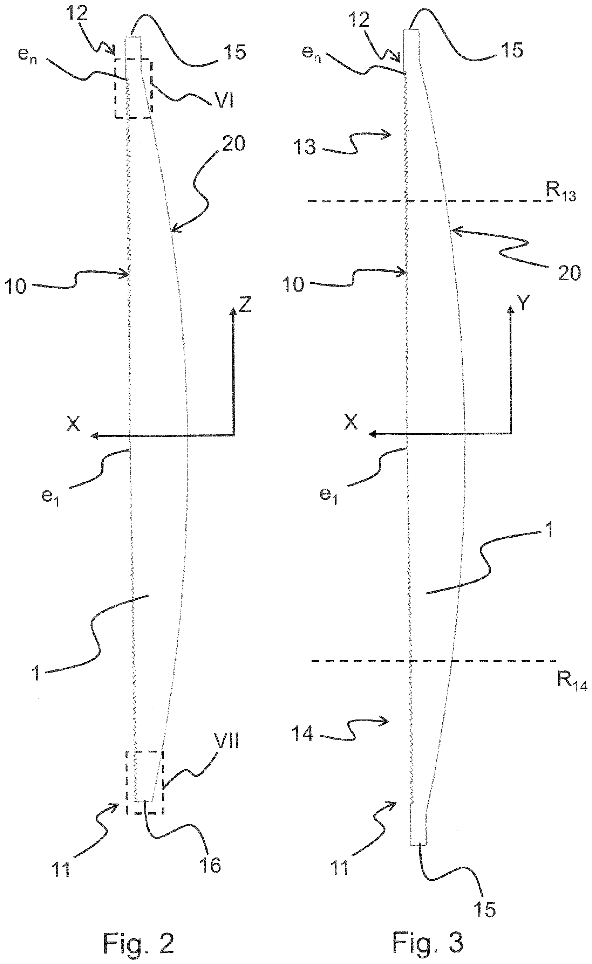

La figure 2 est une section de la lentille 1 selon un plan longitudinal vertical, donc contenant les axes X et Z. La figure 3 est une section de la lentille 1 selon un plan longitudinal horizontal, donc contenant les axes X et Y.

La lentille 1 présente une face d'entrée 20 et une face de sortie 10. La face d'entrée 20 est destinée à recevoir les rayons lumineux provenant, indirectement dans cet exemple, d'une source de lumière. Les rayons lumineux se propagent ensuite dans la lentille 1 jusqu'à la face de sortie 10, d'où ils sortent, formant ainsi un faisceau d'éclairage.

La lentille 1 comprend plusieurs échelons eᵢ dont la surface forme l'essentiel de la face de sortie 10. Dans cet exemple, les échelons eᵢ sont agencés de manière concentrique autour de l'axe optique X et autour d'une portion centrale convexe.

Le nombre d'échelons est « n ». Le premier échelon est référencé e₁ et est agencé autour de la portion centrale convexe, qui elle est ici centrée sur l'axe optique X.

Le dernier échelon est référencé eₙ et est donc l'échelon le plus excentré, à savoir le plus proche du bord périphérique 15 de la lentille 1.

Le nombre d'échelons peut être variable. Plus la lentille 1 doit être convexe et fine, plus ce nombre doit être élevé. Dans cet exemple, le nombre d'échelons est de 72 mais ce nombre n'est pas limitatif.

La lentille 1 présente un premier côté situé en bas, ci-après côté bas 11, et un deuxième côté situé en haut, ci-après côté haut 12.

Pour repérer la position sur un échelon donné eᵢ, on se réfère ici à sa coordonnée angulaire, à savoir l'angle que forme la direction passant par le centre de la lentille 1 et la position donnée avec l'axe transversal Y. Cet angle est appelé ci-après angle de positionnement θ. L'angle de positionnement θ a donc une valeur de 0° sur l'axe transversal Y, 90° sur l'axe vertical Z et au-dessus de l'axe transversal Y, et -90° sur l'axe vertical Z et au-dessous de l'axe transversal Y. L'angle de positionnement θ est donc positif au-dessus de l'axe transversal Y, et négatif en dessous.

La lentille 1 présente deux portions singulières latérales 13, 14 situées à gauche et à droite de la lentille, donc à droite et à gauche en figure 1. En figure 1, seule les limites angulaires, les pointillés situés en position θ₁ et θ₃, de ces portions singulières latérales sont représentées.

Dans cet exemple, ces portions singulières latérales 13, 14 ne recouvrent pas tous les échelons de la lentille 1 et présentent donc également des limites radiales R₁₃ et R₁₄, illustrées uniquement en figure 3 pour plus de clarté.

Dans ces portions singulières latérales 13, 14, la portion correspondante de chacun des échelons est dite portion d'étalement 13', 14'. Les portions d'étalement 13', 14' de ces échelons sont donc également chacune agencées de part et d'autre de l'axe transversal Y, entre des droites en pointillées sur la figure 1. Chacune de ces portions d'étalement 13', 14' présente une étendue angulaire β'entre le début de la portion d'étalement 13', 14' correspondante, en position θ₁, et la fin de la portion d'étalement 13', en position θ₃. La particularité de ces portions d'étalement 13', 14' sera décrite ci-après.

A noter que selon l'invention, la lentille 1 peut présenter un détrompeur permettant de positionner et d'orienter la lentille 1 correctement dans le module lumineux destiné à la recevoir.

Par exemple, ici le détrompeur est un méplat 15 agencé en bas de la lentille et dont la surface est perpendiculaire à l'axe vertical Z. Ainsi, quand celui-ci est horizontal, la lentille 1 est correctement orientée.

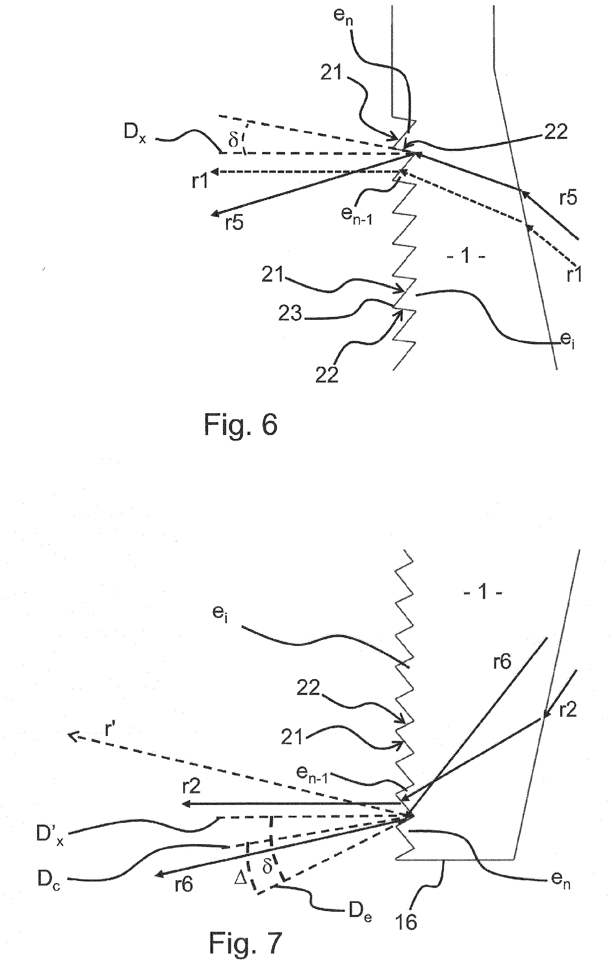

Les figures 6 et 7 représentent un agrandissement au niveau des côtés respectivement haut 12 et bas 11.

Comme on peut le voir sur ces figures, chaque échelon eᵢ présente une première face, dite face principale 21, et une deuxième face, dite dépouille 22. La dépouille 22 présente un angle de dépouille δ avec l'axe optique X, comme on peut le voir sur ces figures, où est représentée une direction D_{X}, D'_{X} parallèle à l'axe optique X et passant par la base de l'une des dépouilles 22.

Selon l'invention, pour au moins l'un des échelons, dit échelon à dépouille évolutive eᵢ, l'angle de dépouille δ est variable le long de cet échelon à dépouille évolutive eᵢ, de manière à ce que cet angle de dépouille δ soit plus élevé d'un premier côté de la lentille, ici le côté bas 11, que d'un deuxième côté de la lentille sensiblement opposé audit premier côté, ici le côté haut 12.

Cette variation est représentée en figures 6 et 7 sur le dernier échelon eₙ, qui est donc un échelon à dépouille évolutive.

En figure 7, la direction théorique D_{c} correspond à la direction, et donc à l'orientation, qu'aurait dû avoir la dépouille 22 de ce dernier échelon eₙ dans le plan de section de la figure 7, si l'angle de dépouille δ avait été constant. La direction Dₑ représente la direction réelle Dₑ de la dépouille de ce dernier échelon eₙ dans le plan de section de la figure 7. Comme on peut l'observer en figure 7, la direction théorique D_{c} est moins écartée de l'axe optique X que la direction réelle Dₑ. On observe un écart angulaire Δ non négligeable entre la valeur réelle de l'angle de dépouille δ en bas de la lentille 1, en figure 6, et la valeur qu'aurait eu cet angle s'il avait été identique à sa valeur en haut de la lentille 1. Dans cet exemple, cet écart angulaire Δ est d'environ 18°. L'effet sur les rayons lumineux r1, r2, r5 et r6 et le chemin hypothétique r' sont décrits plus loin.

Dans cet exemple, tous les échelons eᵢ sont des échelons à dépouille évolutive.

L'angle de dépouille δ varie progressivement le long de chaque échelon eᵢ, depuis le côté haut 12 jusqu'au côté bas 11. Cette variation est dite variation circonférentielle.

Ici, pour chacun des échelons eᵢ situé dans la portion allant du premier échelon eᵢ inclus à celui adjacent à la limite radiale R₁₃, R₁₄ de chaque portion singulière latérale 13, 14, la variation circonférentielle est une augmentation progressive.

Ici, pour chacun des échelons eᵢ situé dans la portion allant de l'échelon adjacent à la limite radiale R₁₃, R₁₄ de chaque portion singulière latérale 13, 14 jusqu'au dernier échelon eₙ, la variation circonférentielle est une augmentation progressive le long de l'échelon correspondant, depuis le côté haut 12 jusqu'au début de la portion d'étalement 13', 14', en θ₁, puis est une augmentation brusque jusqu'à la valeur θ₂ est une diminution progressive jusqu'à la fin de la portion d'étalement 13', 14', en θ₃, pour ensuite à nouveau augmenter progressivement jusqu'au côté bas 11.

Ici, on observe également pour une même direction donnée perpendiculaire à l'axe optique X, par exemple selon les axes Y ou Z, une augmentation des angles de dépouille δ d'un échelon eᵢ à l'autre le long de cette direction, selon un sens allant de l'axe optique X vers le bord périphérique 15 de la lentille 1. Cette variation est appelée variation radiale.

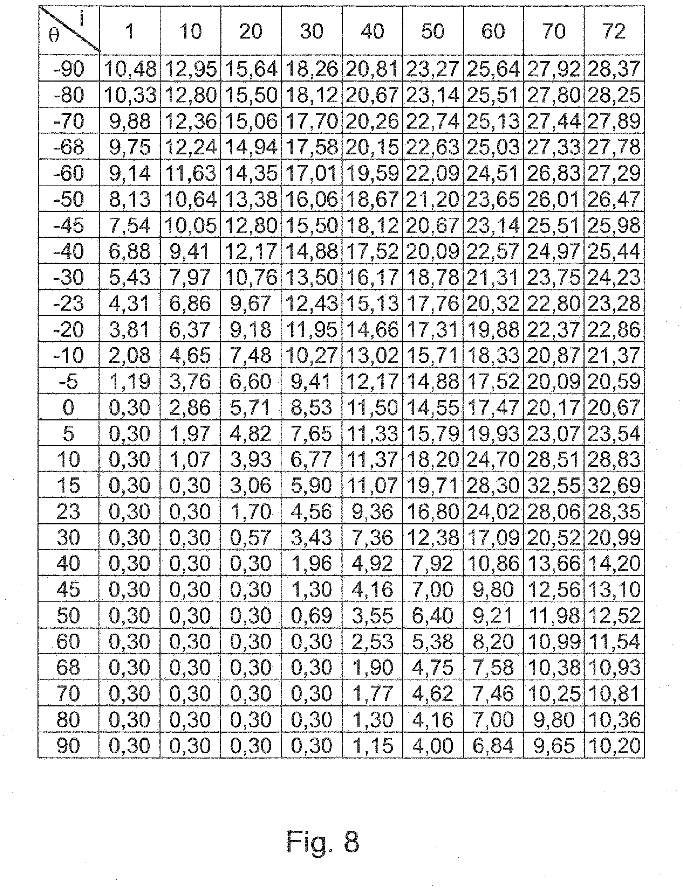

Le tableau de la figure 8 permet d'illustrer ces variations circonférentielles de l'angle de dépouille δ, qui sont continues le long d'un échelon donné, ainsi que les variations radiales de l'angle de dépouille δ. Ce tableau indique l'angle de dépouille δ pour un numéro i d'échelon donné eᵢ, indiqué sur la première ligne, et pour une direction donnée, indiquée sur la première colonne par l'angle de positionnement θ.

Dans cet exemple, la surface de la dépouille 22 des échelons eᵢ est continuellement dérivable et est une surface réglée.

On remarque ici que les potions singulières latérales 13, 14, et donc les portions d'étalement 13', 14' des échelons passant par ces dernières, présentent ici une étendue angulaire β' d'environ 45°, débutant au moins à un angle de positionnement de valeur θ₁ d'environ 40° et se terminant à un angle de positionnement de valeur θ₃ d'environ -5°. La variation de l'angle de dépouille δ diminue à partir de la valeur θ₂ d'environ 15°. La portion où la variation circonférentielle est une diminution a donc une étendue angulaire β d'environ 20°.

Chaque échelon eᵢ présente une arrête 23. Dans cet exemple, les arrêtes 23 des échelons sont coplanaires et concentriques.

Dans cet exemple, ces arrêtes 23 sont circulaires et centrées sur l'axe optique X. Le pas entre chaque arrête 23 est constant, ici de 0,5 millimètres. Chaque échelon est donc séparé par un creux; le lieu du creux forme une courbe dont le rayon de courbure n'est pas constant, du fait de la variation de l'angle de dépouille δ.

En vue de face, en figure 1, les lignes concentriques correspondent aux dépouilles vues en projection. On observe donc essentiellement les faces principales 21 entre ces lignes. Ces faces principales 21 forment ensemble le dioptre actif de la lentille 1 de Fresnel.

De ce fait, la lentille 1 forme une lentille convergente de foyer f.

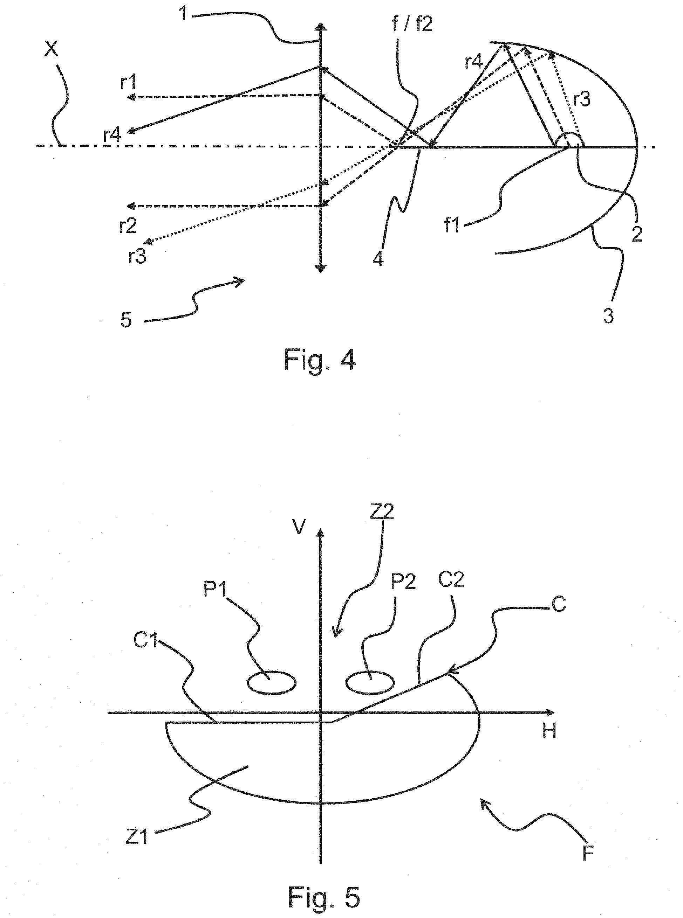

Cette lentille 1 est destinée à être couplée optiquement à un réflecteur elliptique 3, comme illustré en figure 4, pour former un module lumineux 5 selon l'invention.

Classiquement, une source lumineuse 2, telle qu'une diode électroluminescente, est placée à un premier foyer f1 du réflecteur 3.

Ici, les axes optiques X de la lentille 1 et du réflecteur 3 sont coaxiaux.

Un cache 4 est agencé horizontalement et en arrière du foyer f de la lentille. Le bord avant du cache 4 est agencé au niveau du foyer f de la lentille 1. Ce cache empêche que des rayons passent sous le foyer f de la lentille 1.

Ici la face supérieure du cache 4 s'étend horizontalement et comprend l'axe optique de la lentille.

Comme ici, cette face supérieure peut être réfléchissante.

Le foyer f de la lentille 1 est placé sur le deuxième foyer f2 du réflecteur 3. De ce fait, les rayons lumineux r1, r2 qu'émet la source de lumière 2 et partant du premier foyer f1 du réflecteur 3, passent par le foyer f de la lentille 1 et sont ensuite déviés par cette dernière, de sorte qu'ils en ressortent parallèles à l'axe optique X.

Du fait que la source de lumière 2 n'est pas mathématiquement ponctuelle, certains rayons r3, r4 vont être émis en légèrement à distance du foyer f1.

Les rayons r3 émis en arrière du foyer f1 vont être réfléchis vers le bas en passant au-dessus du foyer f1 de la lentille 1 qui les rabattra vers le bas.

Les rayons r4 émis en avant du foyer f1 sont réfléchis par le réflecteur vers le bas et en arrière du deuxième foyer f2 du réflecteur 3. Ils sont ensuite réfléchis vers le haut de la lentille 1 par le cache 4. Ils passent donc également au-dessus du foyer f1 de la lentille 1 qui les rabat vers le bas.

Plus particulièrement dans le cadre de cette lentille à échelons, comme on peut le voir en figure 4 et/ou en figures 6 et 7, les rayons passant par les faces principales 21 sont soit orientés selon une direction parallèle à l'axe optique X de la lentille 1, lorsque ces rayons r1, r2 proviennent du premier foyer f1 du réflecteur, soit orientés vers le bas lorsque ces rayons r4, r3 sont émis légèrement en avant ou arrière du premier foyer f1 du réflecteur 3.

Ainsi, la direction la plus élevée des rayons sortant du module lumineux est celle des rayons r1, r2 passant par le foyer f de la lentille 1.

On forme ainsi un faisceau F d'éclairage, illustré en figure 5, présentant une coupure supérieure C délimitant une zone sombre Z2 d'une zone lumineuse Z1 du faisceau F.

Dans cet exemple, il s'agit d'un faisceau de croisement, dont la ligne de coupure C présente donc une portion horizontale C1 du côté du sens de circulation inverse et une portion oblique C2 du côté du sens de circulation du véhicule. Ainsi on évite d'éblouir les conducteurs suivis ou venant en sens inverse, tout en éclairant le bas-côté situé du côté où circule le véhicule équipé de la lentille 1.

La variation circonférentielle de l'angle de dépouille δ selon l'invention permet d'éviter ici que des rayons r5, r6 ne soient envoyés dans la zone sombre Z2 et au niveau de l'horizon H, où ils pourraient éblouir les autres conducteurs.

En effet, comme on peut le voir en figures 6, du côté haut de la lentille 1, l'angle de dépouille δ est agencé de manière ce que pour une dépouille donnée, les rayons émis en direction de l'échelon correspondant et de celui du dessous passent au-dessus ou au-dessous de la dépouille, donc sans rencontrer cette dépouille. En figure 6, le rayon r5 représente un rayon limite rencontrant la face principale 21 de l'échelon eₙ₋₁ au plus haut de cette face principale 21. L'angle de dépouille δ est tel que les rayons passant au-dessus de ce rayon r5 passent au-dessus de la dépouille de l'échelon eₙ situé au-dessus, pour atteindre la face principale 21 de ce dernier.. Les rayons ne rencontrent donc pas les dépouilles avant réfraction par les faces principales 21. Ils sont donc tous réfractés en avant et vers le bas et ne rencontrent donc pas non plus de dépouille après réfraction. Aucun des rayons ne rencontrant donc de dépouille, le risque de rayons parasites en partie supérieure de la lentille 1 est donc significativement diminué.

Du côté bas de la lentille, certains rayons r6 réfractés par la face principale 21, à savoir ceux les plus proches du fond d'une rainure séparant deux échelons, ici eₙ et eₙ₋₁, rencontrent les dépouilles 22 après réfraction vers le bas. Ils sont alors réfléchis par la dépouille 22 en raison de leur angle d'incidence. Cependant, ces rayons r6 sont moins rabattus vers l'axe optique X qu'ils ne le seraient avec un angle de dépouille constant. En effet, au lieu d'être réfléchis vers le haut par la dépouille 22, ces rayons r6 restent dirigés vers le bas, en raison d'un angle de dépouille δ supérieur avec l'axe optique X comparé à l'angle de dépouille pour le même échelon eₙ en haut de la lentille. On peut voir en figure 7, le chemin hypothétique r' que prendrait le rayon r6 après réflexion si l'angle de dépouille δ était constant. Dans une telle hypothèse, le rayon réfléchi ainsi serait éblouissant puisque dirigé vers le haut.

Ainsi en bas de la lentille, même les rayons rencontrant les dépouilles 22 sont ainsi envoyés dans la zone lumineuse Z1 du faisceau F, où ils ne seront pas éblouissants.

A noter que le côté bas 11 est ainsi situé par rapport à l'axe optique X du même côté que la zone lumineuse Z1 du faisceau F.

Dans les portions d'étalement 13', 14', les angles de dépouille δ permettent de renvoyer les rayons atteignant les dépouilles 22 au-dessus et à une distance de la ligne de coupure C, en les répartissant dans la zone sombre Z2, en particulier de manière à ce qu'ils ne soient pas éblouissants. Par ailleurs, cela permet de renforcer, sans pour autant être éblouissant, la luminosité dans des zones au-dessus de la route dites zones de points de portique P1, P2, susceptibles de comprendre des panneaux sur des portiques, notamment des portiques au-dessus des routes.

Par exemple, cette répartition peut être telle que les valeurs de luminosité dans la zone sombre Z2 soient inférieures à un maximum réglementaire de luminosité pour la réalisation de la zone sombre Z2 d'un faisceau à coupure, tel qu'un feu de croisement, et supérieures à un minimum réglementaire de luminosité pour les zones de points de portique P1, P2.

Les faces principales 21 peuvent comprendre des modulations d'épaisseur, non représentées, agencées de manière à diminuer le chromatisme de la lentille. Alternativement ou en complément, les faces principales 21 peuvent comprendre des modulations d'épaisseur, non représentées, agencées de manière à améliorer ou à atténuer la netteté de coupure du faisceau de croisement.

## Revendications

1. Module lumineux comprenant :
- une lentille (1) de Fresnel, la lentille (1) de Fresnel présentant un axe optique(X) et des échelons, chaque échelon présentant une première face, dite face principale (21), et une deuxième face, dite dépouille (22), la dépouille présentant un angle de dépouille (δ) avec l'axe optique,
- un élément de positionnement d'une source de lumière (2), destiné à supporter la source de lumière en une position donnée (f) par rapport à la lentille,
le module lumineux (5) étant agencé de manière à former un faisceau lumineux (F) avec une ligne de coupure (C) séparant une zone lumineuse (Z1) du faisceau d'une zone sombre (Z2) au moyen d'au moins les premières faces (21) des échelons de la lentille, lorsque une source de lumière est placée dans la position donnée (f),
l'ensemble des premières faces des échelons formant l'équivalent d'un dioptre convergent présentant un foyer en amont de la lentille, le module lumineux comprenant un cache agencé par rapport à la lentille et à la position de la source de lumière de manière à former la ligne de coupure, **caractérisée en ce que** pour au moins l'un des échelons, dit échelon à dépouille évolutive (eᵢ), l'angle de dépouille (δ) est variable le long de cet échelon à dépouille évolutive, de manière à ce que cet angle de dépouille soit plus élevé d'un premier côté (11) de la lentille que d'un deuxième côté (12) de la lentille sensiblement opposé audit premier côté, et **en ce que** le long du ou d'au moins l'un des échelons à dépouille évolutive (ei) et depuis ledit deuxième côté (12) vers ledit premier côté (11), l'échelon correspondant présente au moins une portion d'étalement (13', 14') située latéralement par rapport à une direction s'étendant du premier côté au deuxième côté, dans cette portion d'étalement l'angle de dépouille (δ) diminuant puis augmentant à nouveau,
les portions d'étalement étant agencées de manière à ce que les rayons déviés par les dépouilles dans ces portions d'étalement soient répartis dans la zone sombre.

2. Module lumineux selon la revendication 1, **caractérisée en ce que** la majorité des échelons sont des échelons à dépouille évolutive (eᵢ).

3. Module lumineux selon la revendication 1 ou 2, **caractérisée en ce que** la lentille (1) est destinée à être orientée dans un véhicule avec ledit premier côté (11) en bas et ledit deuxième côté (12) en haut.

4. Module lumineux selon l'une quelconque des revendications précédentes, **caractérisée en ce que** l'angle de dépouille (δ) augmente progressivement le long du ou d'au moins l'un des échelons à dépouille évolutive (eᵢ) depuis ledit deuxième côté (12) vers le premier côté (11).

5. Module lumineux selon l'une quelconque des revendications précédentes, **caractérisée en ce que** la surface de la dépouille (22) du ou des échelons à dépouille évolutive (eᵢ) est continuellement dérivable.

6. Module lumineux selon l'une quelconque des revendications précédentes, **caractérisée en ce que** pour une même direction (Z, Y) perpendiculaire à l'axe optique (X), les angles de dépouille (δ) augmentent d'un échelon à l'autre le long de cette direction, selon un sens allant de l'axe optique vers le bord périphérique (15) de la lentille (1).

7. Module lumineux selon l'une quelconque des revendications précédentes, **caractérisée en ce que** l'angle (β') entre le début et la fin de la portion d'étalement (13', 14') et dont le sommet est sensiblement sur l'axe optique (X) a une valeur comprise entre 15 et 45°, cet angle s'étendant de part et d'autre d'un point situé à mi-chemin entre ledit premier côté (11) et ledit deuxième côté (12).

8. Module lumineux selon l'une quelconque des revendications précédentes, **caractérisée en ce que** la face principale (21) d'au moins l'un des échelons à dépouille évolutive (eᵢ) comprennent des portions optiques diffractives.

9. Module lumineux selon l'une quelconque des revendications précédentes, **caractérisée en ce que** chaque échelon présente une arrête (23), les arrêtes de la majorité des échelons étant coplanaires.

10. Module lumineux selon l'une quelconque des revendications précédentes, **caractérisée en ce que** chaque échelon présente une arrête (23), les arrêtes de la majorité des échelons étant concentriques.

11. Module lumineux selon l'une quelconque des revendications précédentes, dans lequel la lentille (1) est agencée de manière à ce que ledit premier côté (11) soit situé par rapport à l'axe optique (X) du même côté que la zone lumineuse (Z1).

12. Module lumineux selon l'une quelconque des revendications précédentes, dans lequel la lentille est **caractérisée en ce que** si on considère la valeur minimum d'angle de dépouille sur l'ensemble des angles de dépouille (δ) des différents échelons (eᵢ) sur le deuxième côté (12) de la lentille (1) et la valeur maximum d'angle de dépouille sur l'ensemble des angles de dépouille des différents échelons (eᵢ) sur le premier côté (11) de la lentille, l'écart angulaire entre cette valeur minimum et cette valeur maximum est sensiblement égal à l'épaisseur du faisceau de lumière destiné à éclairer la lentille

13. Dispositif lumineux comprenant un module lumineux (5) selon l'une quelconque des revendications précédentes.

## Patentansprüche

1. Leuchtmodul, umfassend:
- eine Fresnellinse (1), wobei die Fresnellinse (1) eine optische Achse (X) und Stufen aufweist, wobei jede Stufe eine erste Seite, Hauptseite (21) genannt, und eine zweite Seite, Flanke (22) genannt, aufweist, wobei die Flanke einen Flankenwinkel (*δ*) mit der optischen Achse bildet,
- ein Element zur Positionierung einer Lichtquelle (2), das dazu bestimmt ist, die Lichtquelle in einer gegebenen Position (f) in Bezug auf die Linse zu halten, wobei das Leuchtmodul (5) so angeordnet ist, dass es ein Lichtbündel (F) mit einer Hell-Dunkel-Grenze (C), die einen leuchtenden Bereich (Z1) des Bündels von einem dunklen Bereich (Z2) trennt, mittels mindestens der ersten Seiten (21) der Stufen der Linse bildet, wenn eine Lichtquelle in der gegebenen Position (f) platziert ist, wobei die Gesamtheit der ersten Seiten der Stufen das Äquivalent eines konvergierenden Diopters bildet, der einen der Linse vorgelagerten Brennpunkt aufweist, wobei das Leuchtmodul eine Abdeckung umfasst, die in Bezug auf die Linse und die Position der Lichtquelle so angeordnet ist, dass sie die Hell-Dunkel-Grenze bildet,
**dadurch gekennzeichnet, dass** bei mindestens einer der Stufen, Stufe mit evolutiver Flanke (ei) genannt, der Flankenwinkel (*δ*) entlang dieser Stufe mit evolutiver Flanke variabel ist, so dass dieser Flankenwinkel auf einer ersten Seite (11) der Linse größer ist als auf einer zweiten Seite (12) der Linse, die im Wesentlichen entgegengesetzt zu der ersten Seite ist, und dass entlang der oder mindestens einer der Stufen mit evolutiver Flanke (ei) und von der zweiten Seite (12) aus zu der ersten Seite (11) hin die entsprechende Stufe mindestens einen Ausweitungsabschnitt (13', 14') aufweist, der seitlich in Bezug eine Richtung gelegen ist, die sich von der ersten Seite zur zweiten Seite erstreckt, wobei in diesem Ausweitungsabschnitt der Flankenwinkel (*δ*) abnimmt und dann wieder zunimmt,
wobei die Ausweitungsabschnitte so angeordnet sind, dass die von den Flanken in diese Ausweitungsabschnitte umgelenkten Strahlen in dem dunklen Bereich verteilt sind.

2. Leuchtmodul nach Anspruch 1, **dadurch gekennzeichnet, dass** die Mehrheit der Stufen Stufen mit evolutiver Flanke (ei) sind.

3. Leuchtmodul nach Anspruch 1 oder 2, **dadurch gekennzeichnet, dass** die Linse (1) dazu bestimmt ist, in einem Fahrzeug mit der ersten Seite (11) nach unten und mit der zweiten Seite (12) nach oben ausgerichtet zu sein.

4. Leuchtmodul nach einem der vorhergehenden Ansprüche, dass der Flankenwinkel (*δ*) entlang der oder mindestens einer der Stufen mit evolutiver Flanke (ei) von der zweiten Seite (12) aus zu der ersten Seite (11) hin progressiv zunimmt.

5. Leuchtmodul nach einem der vorhergehenden Ansprüche, **dadurch gekennzeichnet, dass** die Fläche der Flanke (22) der Stufe oder Stufen mit evolutiver Flanke (ei) kontinuierlich ableitbar ist.

6. Leuchtmodul nach einem der vorhergehenden Ansprüche, **dadurch gekennzeichnet, dass** bei ein und derselben Richtung (Z, Y), die senkrecht zu der optischen Achse (X) verläuft, die Flankenwinkel (*δ*) von einer Stufe zur anderen entlang dieser Richtung zunehmen, gemäß einem Richtungssinn von der optischen Achse zum Umfangsrand (15) der Linse (1).

7. Leuchtmodul nach einem der vorhergehenden Ansprüche, **dadurch gekennzeichnet, dass** der Winkel (β') zwischen dem Anfang und dem Ende des Ausweitungsabschnitts (13', 14') und dessen Scheitelpunkt im Wesentlichen auf der optischen Achse (X) liegt, einen Wert zwischen 15 und 45° hat, wobei sich dieser Winkel beidseits eines Punktes erstreckt, der auf halbem Weg zwischen der ersten Seite (11) und der zweiten Seite (12) liegt.

8. Leuchtmodul nach einem der vorhergehenden Ansprüche, **dadurch gekennzeichnet, dass** die Hauptseite (21) mindestens einer der Stufen mit evolutiver Flanke (ei) beugende optische Abschnitte umfasst.

9. Leuchtmodul nach einem der vorhergehenden Ansprüche, **dadurch gekennzeichnet, dass** jede Stufe eine Kante (23) aufweist, wobei die Kanten der Mehrheit der Stufen komplanar sind.

10. Leuchtmodul nach einem der vorhergehenden Ansprüche, **dadurch gekennzeichnet, dass** jede Stufe eine Kante (23) aufweist, wobei die Kanten der Mehrheit der Stufen konzentrisch sind.

11. Leuchtmodul nach einem der vorhergehenden Ansprüche, bei dem die Linse (1) so angeordnet ist, dass die erste Seite (11) in Bezug auf die optische Achse (X) auf derselben Seite wie der leuchtende Bereich (Z1) liegt.

12. Leuchtmodul nach einem der vorhergehenden Ansprüche, bei dem die Linse **dadurch gekennzeichnet ist, dass**, wenn man den kleinsten Flankenwinkelwert über die Gesamtheit der Flankenwinkel (*δ*) der verschiedenen Stufen (ei) auf der zweiten Seite (12) der Linse (1) und den größten Flankenwinkelwert über die Gesamtheit der Flankenwinkel der verschiedenen Stufen (ei) auf der ersten Seite (11) der Linse betrachtet, die Winkeldifferenz zwischen diesem kleinen Wert und diesem größten Wert im Wesentlichen gleich der Dicke des Lichtbündels ist, das dazu bestimmt ist, die Linse zu beleuchten.

13. Leuchtvorrichtung, umfassend ein Leuchtmodul (5) nach einem der vorhergehenden Ansprüche.

## Claims

1. Light-emitting module comprising:
- a Fresnel lens (1), the Fresnel lens (1) having an optical axis (X) and comprising Fresnel prisms, each Fresnel prism having a first facet, called the main facet (21), and a second facet, called the draft facet (22), the draft facet making a draft angle (δ) to the optical axis, and
- an element for positioning a light source (2), said element being intended to hold the light source in a given position (f) with respect to the lens,
the light-emitting module (5) being arranged so as to form, by means of at least the first facets (21) of the Fresnel prisms of the lens, a light beam (F) with a cutoff line (C) separating a light zone (Z1) of the beam from a dark zone (Z2), when a light source is placed in the given position (f),
the first facets of the Fresnel prisms together forming the equivalent of a convergent dioptric interface having a focal point upstream of the lens, the light-emitting module comprising a shield that is arranged, with respect to the lens and to the position of the light source, to form the cutoff line,
**characterized in that** for at least one of the Fresnel prisms, referred to as the variable-draft-angle Fresnel prism (eᵢ), the draft angle (δ) is variable along this variable-draft-angle Fresnel prism, so that this draft angle is higher on a first side (11) of the lens than on a second side (12) of the lens that is substantially opposite said first side, and **in that** along the or at least one of the variable-draft-angle Fresnel prisms (ei) and from said second side (12) to said first side (11), the corresponding Fresnel prism comprises at least one spreading segment (13', 14') located laterally with respect to a direction extending from the first side to the second side, and in this spreading segment the draft angle (δ) decreases then increases again,
the spreading segments being arranged so that the rays deviated by the draft facets in these spreading segments are deviated toward the dark zone.

2. Light-emitting module according to Claim 1, **characterized in that** most of the Fresnel prisms are variable-draft-angle Fresnel prisms (eᵢ).

3. Light-emitting module according to Claim 1 or 2, **characterized in that** the lens (1) is intended to be oriented, in a vehicle, with said first side (11) at the bottom and said second side (12) at the top.

4. Light-emitting module according to any one of the preceding claims, **characterized in that** the draft angle (δ) gradually increases along the or at least one of the variable-draft-angle Fresnel prisms (ei) from said second side (12) to the first side (11).

5. Light-emitting module according to any one of the preceding claims, **characterized in that** the surface of the draft facets (22) of the one or more variable-draft-angle Fresnel prisms (ei) is continuously derivable.

6. Light-emitting module according to any one of the preceding claims, **characterized in that**, for a given axis (Z, Y) perpendicular to the optical axis (X), the draft angles (δ) increase from one Fresnel prism to the next along this axis, in a direction extending from the optical axis to the peripheral edge (15) of the lens (1).

7. Light-emitting module according to any one of the preceding claims, **characterized in that** the angle (β') between the start and end of the spreading segment (13', 14') and the vertex of which is substantially on the optical axis (X) has a value comprised between 15 and 45°, this angle extending on either side of a point located halfway between said first side (11) and said second side (12).

8. Light-emitting module according to any one of the preceding claims, **characterized in that** the main facet (21) of at least one of the variable-draft-angle Fresnel prisms (ei) comprises diffractive optical segments.

9. Light-emitting module according to any one of the preceding claims, **characterized in that** each Fresnel prism has a ridge (23), the ridges of most of the Fresnel prisms being coplanar.

10. Light-emitting module according to any one of the preceding claims, **characterized in that** each Fresnel prism has a ridge (23), the ridges of most of the Fresnel prisms being concentric.

11. Light-emitting module according to any one of the preceding claims, wherein the lens (1) is arranged so that said first side (11) is located with respect to the optical axis (X) on the same side as the light zone (Z1).

12. Light-emitting module according to any one of the preceding claims, wherein the lens is **characterized in that**, if the draft angle of minimum value of all the draft angles (δ) of the various Fresnel prisms (ei) on the second side (12) of the lens (1) and the draft angle of maximum value of all the draft angles of the various Fresnel prisms (ei) on the first side (11) of the lens are considered, the angular difference between this minimum value and this maximum value is substantially equal to the thickness of the light beam intended to illuminate the lens.

13. Light-emitting device comprising a light-emitting module (5) according to any one of the preceding claims.
